(19) Europäisches Patentamt
European Patent Office
Office européen des brevets

(11) Publication number: **0 100 551**
**B1**

(12) **EUROPEAN PATENT SPECIFICATION**

(45) Date of publication of patent specification: **15.07.87**

(51) Int. Cl.[4]: **C 08 G 75/02,** C 08 G 75/14

(21) Application number: **83107608.8**

(22) Date of filing: **02.08.83**

(54) **Arylene sulfide terpolymers and processes for making them.**

(30) Priority: **03.08.82 US 404683**

(43) Date of publication of application:
**15.02.84 Bulletin 84/07**

(45) Publication of the grant of the patent:
**15.07.87 Bulletin 87/29**

(84) Designated Contracting States:
**AT BE CH DE FR GB IT LI LU NL SE**

(56) References cited:
**EP-A-0 023 313**
**EP-A-0 040 747**
**FR-A-2 282 453**
**US-A-3 354 129**
**US-A-4 038 261**
**US-A-4 064 114**
**US-A-4 089 847**
**US-A-4 350 810**

(73) Proprietor: **PHILLIPS PETROLEUM COMPANY**
**5th and Keeler**
**Bartlesville Oklahoma 74004 (US)**

(72) Inventor: **Cleary, James William**
**1215 South Dewey**
**Bartlesville, OK 74003 (US)**

(74) Representative: **Dost, Wolfgang, Dr.rer.nat., Dipl.-Chem. et al**
**Patent- und Rechtsanwälte Bardehle-Pagenberg-Dost-Altenburg & Partner Postfach 86 06 20**
**D-8000 München 86 (DE)**

**EP 0 100 551 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to arylene sulfide terpolymers and processes for making them.

The production of arylene sulfide polymers is well known in the art as disclosed in U.S. Patent 3,354,129 to Edmonds et al. In addition, arylene sulfide copolymers are also known, as disclosed in U.S. Patent 4,038,261.

I have now discovered that arylene sulfide terpolymers can be made as well. These terpolymers have applications in the formation of articles of manufacture such as films, sheets, fibers, coatings, and molded articles. Substantially amorphous, essentially non-crystalline arylene sulfide terpolymers are particularly desirable as they are melt stable and can be processed at lower temperatures than crystalline poly(arylene sulfide). Such terpolymers can be prepared directly to the range of melt flow desired for injection molding or can be air cured to attain the desired melt flow.

Unexpectedly, I have discovered arylene sulfide terpolymers that are especially non-crystalline (amorphous) and heat stable as they lack both a melting point, $T_m$, and a crystallization temperature, $T_c$, value as determined by the conventional method of Differential Thermal Analysis (DTA). Hence, the terpolymers of this invention are particularly useful in applications such as molding injections. These terpolymers can be filled with glass fibers, pigments, clay, talc, and other substances used in molding injections.

It is an object of this invention to provide novel, arylene sulfide terpolymers. It is a further object of this invention to provide processes for making these terpolymers.

Other subjects, aspects, and the several advantages of the present invention will become apparent from this specification and the claims.

In one embodiment of the present invention, I have discovered a process for making novel arylene sulfide terpolymers by reacting at least one alkali metal sulfide, at least one p-dihalo unsubstituted benzene, at least one polyhalo aromatic compound having more than two halogen substituents per molecule, at least one p-dihalo, alkyl substituted benzene, and at least one N-alkyl lactam, under polymerization conditions of temperature and time sufficient to produce the desired terpolymer.

In a second embodiment of the present invention, I have discovered still another process for making novel arylene sulfide terpolymers by first reacting at least one alkali metal sulfide in hydrated form or in an aqueous mixture with at least one N-alkyl lactam to form a reaction product, therefore heating the reaction product to form a dehydrated composition, then reacting the dehydrated composition with a mixture consisting essentially of at least one p-dihalo unsubstituted benzene, at least one polyhalo aromatic compound having more than two halogen substituents per molecule, at least one p-dihalo alkyl substituted benzene, and at least one member selected from (a) water in an amount of 0.2 mole to 2.5 moles per molecule of alkali metal sulfide, and (b) at least one alkali metal carboxylate and water, including water of hydration, in an amount of 0.0 mole to 2.5 moles per mole of alkali metal sulfide under polymerization conditions for a time sufficient to produce a desired terpolymer.

In a third embodiment of the present invention, novel arylene sulfide terpolymers produced by the processes of the first and second embodiments of the present invention are provided.

P-dihalo unsubstituted benzenes which can be employed in the process of this invention can be represented by the formula

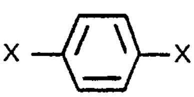

where each X is selected from chlorine, bromine, and iodine.

Examples of some p-dihalo unsubstituted benzenes which can be employed in the process of this invention include p-dichlorobenzene, p-dibromobenzene, p-diiodobenzene, 1-chloro-4-bromobenzene, 1-chloro-4-iodobenzene, 1-bromo-4-iodobenzene, and mixtures thereof.

Polyhalo aromatic compounds having more than two halogen substituents per molecule which can be employed in the process of this invention can be represented by the formula $R^1X_n$, where each X is selected from chlorine, bromine, and iodine, n is an integer of 3 to 6, and $R^1$ is a polyvalent aromatic radical of valence n which can have up to about 4 methyl substituents, the total number of carbon atoms in $R^1$ being within the range of 6 to 16.

Examples of some polyhalo aromatic compounds having more than two halogen substituents per molecule which can be employed in the process of this invention include 1,2,3-trichlorobenzene, 1,2,4-trichlorobenzene, 1,2,3,5-tetrabromobenzene, hexachlorobenzene, 1,3,5-trichloro-2,4,6-trimethylbenzene, 2,2',4,4'-tetrachlorobiphenyl, 2,2',5,5'-tetraiodobiphenyl, 2,2',6,6'-tetrabromo-3,3',5,5'-tetramethylbiphenyl, 1,2,3,4-tetrachloronaphthalene, 1,2,4-tribromo-6-methylnaphthalene, and mixtures thereof.

P-dihalo alkyl substituted bezenes which can be employed in the process of this invention can be represented by the formula:

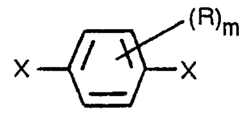

where R is a $C_1$ to $C_{12}$ alkyl group, m is 1, 2, 3, or 4, X is either Cl, Br, or I.

Examples of p-dihalo alkyl substituted benzenes which can be employed in the process of this invention include 2,5-dichlorotoluene, 2,5-dichloro-p-xylene, 2,5-dibromotoluene, 2,5-diiodo-p-xylene, 2,5-dichloro-1,3,6-trimethylbenzene, and mixtures thereof.

Alkali metal sulfides which can be employed in the process of this invention are sodium sulfide, potassium sulfide, rubidium sulfide, cesium sulfide, as well as mixtures thereof. The alkali metal sulfide can be used in the anhydrous form, as a hydrate, or as an aqueous mixture. If desired, the alkali metal sulfide can be produced by reaction of hydrogen sulfide or sodium bisulfide with sodium hydroxide in an aqueous medium.

N-Alkyl lactams which can be employed in the process of this invention can be represented by the formula

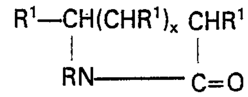

where each $R^1$ is selected from hydrogen and R, R is an alkyl radical having 1 to about 3 carbon atoms, x is an integer of 1 to 3, and the total number of carbon atoms in the N-alkyl lactam is within the range of 5 to 10.

Examples of some N-alkyl lactams which can be employed in the process of this invention include N-methyl-2-pyrrolidone, N-ethyl-2-pyrrolidone, N-isopropyl-2-pyrrolidone, N,3-dimethyl-2-pyrrolidone, N-Propyl-5-methyl-2-pyrrolidone, N,3,4,5-tetramethyl-2-pyrrolidone, N-isopropyl-4-propyl-2-pyrrolidone, N-methyl-2-piperidone, N,6-diethyl-2-piperidone, N-methyl-5-isopropyl-2-piperidone, N-methyl-3-ethyl-2-piperidone, N-methyl-2-oxohexamethylenimine, N-ethyl-2-oxohexamethyleninimine, N-methyl-2-oxo-5-ethylhexamethylenimine, N-propyl-2-oxo-5-methylhexamethyleninmine, N-methyl-2-oxo-3-propylhexamethyleninime, N-methyl-2-oxo-7-isopropylhexamethylenimine, and the like, and mixtures thereof.

Alkali metal carboxylates which can be employed in the process of this invention can be represented by the formula $R^4CO_2M$, where $R^4$ is a hydrocarbyl radical selected from alkyl, cycloalkyl, and aryl, and combinations thereof such as alkaryl, aralkyl, and the like, and the number of carbon atoms in $R_4$ is within the range of 1 to 20 and M is Li, Na, K, Rb, Cs. If desired, the alkali metal carboxylate can be employed as a hydrate or as a solution or dispersion in water. However, if the total amount of free water and/or water of hydration present, including that associated with the alkali metal sulfide, exceeds the amount specified hereinabove, excess water must be removed, e.g., by distillation, prior to the polymerization step.

Examples of some alkali metal carboxylates which can be employed in the process of this invention include sodium acetate, sodium propionate, sodium 2-methylpropionate, sodium benzoate, sodium butyrate, sodium valerate, sodium hexanoate, sodium heptanoate, sodium 2-methyloctanoate, sodium dodecanoate, lithium acetate, lithium propionate, lithium hexanoate, rubidium acetate, rubidium butyrate, rubidium heptanoate, cesium acetate, cesium propionate, cesium octanoate and mixtures thereof. The preferred alkali metal carboxylate is sodium acetate.

Although the mole ratio of the combination of p-dihalo unsubstituted and substituted benzene to alkali metal sulfide can vary somewhat, generally, it will be within the range of 0.98:1 to 1.03:1, preferably within the range of 0.99:1 to 1.02:1. The mole ratio of polyhalo aromatic compound having more than two halogen substituents per molecule to alkali metal sulfide can vary considerably, depending in part on the halogen content of said polyhalo aromatic compound and on the water and sodium carboxylate content of the polymerization system, but generally will be within the range of 0.0002:1 to 0.014:1, preferably, within the range of 0.001:1 to 0.012:1. The mole ratio of alkali metal carboxylate, when used, to alkali metal sulfide can vary over a wide range, but generally will be within the range of 0.05:1 to 1.5:1, preferably within the range of 0.1:1 to 0.8:1. The mole ratio of N-alkyl lactam to alkali metal sulfide can vary considerably, but generally will be within the range of 2:1 to 10:1, preferably within the range of 3:1 to 6:1.

Although the reaction temperature at which the polymerization is conducted can vary over a wide range, generally it will be within the range of 180°C to 285°C, preferably within the range of 190°C to 275°C. The reaction time can vary greatly, depending in part on the reaction temperature, but generally will be within the range of 1 hour to 60 hours, preferably within the range of 2 hours to 10 hours. In a presently preferred procedure, the polymerization is conducted within a first temperature in the range of 180°C to 245°C, preferably at 190°C to 245°C, and then within a second temperature range of 245°C to 285°C, preferably 245°C to 275°C, the total reaction time for the polymerization in these two temperature ranges being within the range of 1 hour to 60 hours, preferably 2 hours to 10 hours, 15 percent to 70 percent of which time is within the first temperature range, the temperature during at least 50 percent of the reaction time in the first temperature range being at least 20°C below the final temperature in the second temperature range. Here, too, the reaction times are dependent, in part, on the reaction temperatures. In either or both of the temperature ranges, the temperature can be increased continuously or maintained

predominantly at selected levels within relatively restricted temperature limits.

The pressure at which the polymerization reaction is conducted should be sufficient to maintain the p-dihalo unsubstituted benzene, the p-dihalo-alkyl substituted benzene, the polyhalo aromatic compound having more than two halogen substituents per molecule, the N-alkyl lactam, and the water substantially in the liquid phase.

The process of this invention can be carried out by mixing the p-dihalo unsubstituted benzene, the p-dihalo-alkyl substituted benzene, the polyhalo aromatic compound having more than two halogen substituents per molecule, the alkali metal sulfide, the N-alkyl lactam, the water, including water of hydration, if used, and the alkali metal carboxylate, if used, in any order. If more than the desired amount of water, in the form of free water and/or water of hydration is present in the mixture or any component of the mixture, any water in excess of the desired amount can be removed, e.g., by distillation. Such excess water can be removed from the component with which water is initially associated, e.g., the alkali metal sulfide or the sodium carboxylate, or from a mixture of two or more of the essential ingredients. For example, water can be removed from a mixture of N-alkyl lactam and hydrated alkali metal sulfide, optionally containing free water and/or alkali metal carboxylate which itself can be employed in anhydrous or hydrated form or as a solution. If the amount of water removed is greater than desired, water can then be added as required to provide the quantity of water desired. When the above dehydration step is employed, it is preferable to add the p-dihalo unsubstituted benzene, the p-dihalo-alkyl substituted benzene, and the polyhalo aromatic compound having more than two halogen substituents per molecule after the dehydration step has begun.

The arylene sulfide terpolymer produced by the processes of this invention can be separated from the reaction mixture by conventional procedures, e.g. by filtration of the polymer, followed by washing with water, or by dilution of the reaction mixture with water, followed by filtration and water washing of the polymer. Alternatively, N-alkyl lactam can be recovered by distillation from the reaction mixture prior to washing with water. When this latter procedure is employed, and the N-alkyl lactam is distilled at elevated temperatures, e.g., above 200°C, it is preferable that carbon dioxide be added during the polymerization reaction or upon completion of the polymerization reaction, but prior to distillation of the N-alkyl lactam, to inhibit decomposition of the arylene sulfide terpolymer during distillation of the N-alkyl lactam.

In a preferred embodiment of the present invention amorphous, essentially non-crystalline arylene sulfide terpolymers are produced. They are prepared in the same manner as described above, except that from 12 to 30, preferably from 15 to 20 mole percent, of the p-dihalo alkyl substituted benzene must specifically be employed.

The following examples illustrate the present invention.

## EXAMPLES

### Example I

In this example the preparation of the terpolymers of this invention is described. Polymerization reactions were carried out in a 1 liter, electrically heated, stirred autoclave manufactured by Autoclave Engineers, Inc. 125.16 grams (0.98 moles) of sodium sulfide flakes, 24.61 grams (10.30 moles) of anhydrous sodium acetate, 1.2 grams (0.03 moles) of sodium hydroxide and 228 $cm^3$ of N-methyl-2-pyrrolidone (NMP) were charged to the reactor, and heated, with stirring, under atmospheric pressure until the air in the reactor is replaced by steam. The system was closed, heated under autogenous pressure to about 235°C, cooled to about 162°C, and dehydrated by distillation under atmospheric pressure at a temperature of up to about 216°C.

Then 0.9925 moles of either p-dichlorobenzene (DCB) (for a control resin) or 0.9925 moles of a mixture of DCB and either a dichlortoluene (DCT) or a dichloroxylene (DCX) (for inventive resins), 0.905 grams (0.005 moles) of 1,2,4-trichlorobenzene (TCB), 4.5 grams (0.25 moles) of water, and 92 $cm^3$ of NMP were added to the reactor. The reactor content was heated under autogenous pressure for 2 hours at 235°C and for 3 hours at 265°C. The cooled polymer was removed from the reactor, slurried and washed with hot water, collected on a suction filter, rinsed with acetone, and dried in a vacuum oven at about 100°C.

### Example II

Pertinent properties of four arylene sulfide terpolymers are listed in Table I. Data in Table I show that in terpolymers containing at least 15 mole-% of either 2,5-dichlortoluene or 2,5-dichloroxylene no crystallization temperature (Tc) and melting temperature (Tm) were detected. These results indicate that said terpolymers were essentially non-crystalline. By contrast, terpolymers containing up to 20 mole-% of either 2,4- or 2,6-dichlorotoluene as comonomers remained crystalline.

TABLE I

| Run | Mole % of Comonomer I | Mole % of Comonomer II | Mole % of Comonomer III | Transition Temperatures(a) (°C) $T_g$ | $T_c$ | $T_m$ | Inherent(b) Viscosity |
|---|---|---|---|---|---|---|---|
| 1 | 99.5% DCB | — | 0.5% TCB | 85 | 125 | 285 | 0.29 |
| 2 | 94.5% DCB | 5.0% 2,5-DCT | 0.5% TCB | 90 | 164 | 256 | 0.50 |
| 3 | 89.5% DCB | 10.0% 2,5-DCT | 0.5% TCB | 87 | 165 | 240 | — |
| 4 | 84.5% DCB | 15.0% 2,5-DCT | 0.5% TCB | 86 | None | None | 0.25 |
| 5 | 84.0% DCB | 15.0% 2,5-DCT | 1.0% TCB | 88 | None | None | 0.57 |
| 6 | 83.4% DCB | 16.1% 2,5-DCT | 0.5% TCB | 85 | None | None | 0.25 |
| 7 | 79.5% DCB | 20.0% 2,5-DCX | 0.5% TCB | 85 | None | None | 0.20 |
| 8 | 94.5% DCB | 5.0% 2,5-DCX | 0.5% TCB | 87 | 151 | 260 | 0.32 |
| 9 | 89.5% DCB | 10.0% 2,5-DCX | 0.5% TCB | 90 | 182 | 245 | 0.29 |
| 10 | 84.5% DCB | 15.0% 2,5-DCX | 0.5% TCB | 94 | None | None | 0.31 |
| 11 | 84.0% DCB | 15.0% 2,5-DCX | 1.0% TCB | 92 | None | None | 0.37 |
| 12 | 89.5% DCB | 10.0% 2,4-DCT | 0.5% TCB | 61 | 119 | 255 | 0.06 |
| 13 | 84.5% DCB | 15.0% 2,4-DCT | 0.5% TCB | 64 | 131 | 233 | 0.07 |
| 14 | 79.5% DCB | 20.0% 2,4-DCT | 0.5% TCB | 69 | 155 | 215 | 0.06 |
| 15 | 89.5% DCB | 10.0% 2,6-DCT | 0.5% TCB | 74 | 139 | 248 | 0.12 |
| 16 | 84.5% DCB | 15.0% 2,6-DCT | 0.5% TCB | 76 | 170 | 230 | 0.09 |
| 17 | 79.5% DCB | 20.0% 2,6-DCT | 0.5% TCB | 67 | 160 | 220 | 0.08 |

Footnotes: (a) determined with a Du Pont Model 900 Differential Thermal Analyzer; $T_g$ = glass transition temperature; $T_c$ = crystallization temperature; $T_m$ = melting temperature
(b) determined at 204°C on solutions containing 0.4 grams of terpolymer per 100 ml of 1-chloronaphthalene.

## Claims

1. A process for making an arylene sulfide terpolymer comprising reacting at least one alkali metal sulfide, at least one p-dihalo unsubstituted benzene, at least one polyhalo aromatic compound having more than two halogen substituents per molecule, at least one p-dihalo alkyl substituted benzene, and at least one N-alkyl lactam under polymerization conditions of temperature and time sufficient to produce the desired terpolymer, wherein said p-dihalo, alkyl substituted benzene is present in a quantity of 12 to 30 mole percent.

2. The process of claim 1 characterized in that said reaction is carried out in the presence of (a) water, including water of hydration, in an amount of 0.2 to 2.5 moles per mole of alkali metal sulfide, or (b) at least one alkali metal carboxylate and water, including water of hydration, in an amount of 0.0 to 2.5 moles per mole of alkali metal sulfide.

3. The process of claim 2 characterized by first reacting said alkali metal sulfide in hydrated form or in an aqueous mixture with said N-alkyl lactam to form a reaction product, thereafter heating the reaction product to form a dehydrated composition, then reacting the dehydrated composition with a mixture containing said p-dihalo unsubstituted benzene, said polyhalo aromatic compound having more than 2 halogen atoms per molecule, said p-dihalo alkyl substituted benzene, and said (a) or (b).

4. The process of any of claims 1 to 3 characterized in that the mole ratio of the combination of said p-dihalo unsubstituted benzene and said p-dihalo alkyl substituted benzene to alkali metal sulfide is within the range of 0.98:1 to 1.03:1, the mole ratio of said polyhalo aromatic compound to said alkali metal sulfide is within the range of 0.0002:1 to 0.014:1 and the mole ratio of said N-alkyl lactam to said alkali metal

sulfide is within the range of 2:1 to 10:1.

5. The process of any of claims 1 to 4 characterized in that said p-dihalo unsubstituted benzene is p-dichlorobenzene, said polyhalo aromatic compound is 1,2,4-trichlorobenzene, said p-dihalo alkyl substituted benzene is either 2,5-dichlorotoluene or 2,5-dichloro-p-xylene and said N-alkyl lactam is N-methyl pyrrolidone.

6. The process of at least one of cliams 1 to 5 characterized in that said p-dihalo alkyl substituted benzene is present in an amount from 15 to 20 mole percent.

7. The process of any of claims 1 to 6 characterized in that said polymerization is carried out at a temperature of 180 to 285°C; in particular wherein said polymerization is carried out for a period of time from 1 to 60 hours.

8. The process of any of claims 2 to 7 characterized in that the mole ratio of alkali metal carboxylate when used, to said alkali metal sulfide is within the range of 0.05:1 to 1.5:1; in particular wherein said alkali metal carboxylate is a sodium carboxylate.

9. A process for making an arylene sulfide terpolymer comprising first reacting at least one alkali metal sulfide in hydrated form or in an aqueous mixture with at least one N-alkyl lactam to form a reaction product, thereafter heating the reaction product to form a dehydrated composition, then reacting the dehydrated composition with a mixture consisting essentially of at least one p-dihalo unsubstituted benzene, at least one polyhalo aromatic compound having more than 2 halogen atoms per molecule, at least one p-dihalo, alkyl substituted benzene, and at least one member selected from (a) water in an amount of 0.2 mole to 2.5 moles per mole of alkali metal sulfide, and (b) at least one alkali metal carboxylate and water, including water of hydration, in an amount of 0.0 mole to about 2.5 moles per mole of alkali metal sulfide under polymerization conditions for a time sufficient to produce the desired terpolymer, wherein said p-dihalo, alkyl substituted benzene is present in a quantity of 12 to 30 mole percent.

10. A terpolymer made according to the process of one of claims 1 to 9.

11. An article of manufacture prepared from the terpolymer of claim 10.

**Patentansprüche**

1. Verfahren zum Herstellen eines Arylensulfid-Terpolymers, bei dem man zumindest ein Alkalimetallsulfid, zumindest ein unsubstituiertes p-Dihalobenzol, zumindest eine mehr als zwei Halogensubstituenten pro Molekül aufweisende aromatische Polyhaloverbindung, zumindest ein alkylsubstituiertes p-Dihalobenzol, und zumindest eine N-Alkyllactam unter Polymerisationsbedingungen der Temperatur und Zeit umsetzt, die ausreichend sind, um das gewünschte Terpolymer herzustellen, wobei das alkylsubstituierte p-Dihalobenzol in einer Menge von 12 bis 30 Mol% anwesend ist.

2. Verfahren nach Anspruch 1, dadurch gekennzeichnet, daß man die Reaktion ausführt in Anwesenheit von (a) Wasser, einschließlich Hydratwasser, in einer Menge von 0,2 bis 2,5 Mol pro Mol Alkalimetallsulfid oder (b) zumindest eines Alkalimetallcarboxylats und Wasser, einschließlich Hydratwasser, in eine Menge von 0,0 bis 2,5 Mol pro Mol Alkalimetallsulfid.

3. Verfahren nach Anspruch 2, dadurch gekennzeichnet, daß man zuerst das Alkalimetallsulfid in hydratisierter Form oder in einem wässrigen Gemisch mit dem N-Alkyllactam zur Bildung eines Reaktionsprodukts umsetzt, danach das Reaktionsprodukt zur Bildung einer dehydratisierten Zusammensetzung erwärmt, dann die dehydratisierte Zusammensetzung mit einem Gemisch umsetzt, das das unsubstituierte p-Dihalobenzol, die aromatische Polyhaloverbindung mit mehr als zwei Halogenatomen pro Molekül, das alkylsubstituierte p-Dihalobenzol, und (a) oder (b) enthält.

4. Verfahren nach einem der Ansprüche 1 bis 3, dadurch gekennzeichnet, daß das Molverhältnis der Kombination des unsubstituierten p-Dihalobenzols und des alkylsubstituierten p-Dihalobenzols zu Alkalimetallsulfid innerhalb des Bereiches von 0,98:1 bis 1,03:1 liegt, das Molverhältnis der aromatischen Polyhaloverbindung zu dem Alkalimetallsulfid innerhalb des Bereiches von 0,0002:1 bis 0,014:1 liegt und das Molverhältnis des N-Alkyllactams zu dem Alkalimetallsulfid innerhalb des Bereiches von 2:1 bis 10:1 liegt.

5. Verfahren nach einem der Ansprüche 1 bis 4, dadurch gekennzeichnet, daß das unsubstituierte p-Dihalobenzol p-Dichlorbenzol ist, die aromatische Polyhaloverbindung 1,2,4-Trichlorbenzol ist, das alkylsubstituierte p-Dihalobenzol entweder 2,5-Dichlortoluol oder 2,5-Dichlor-p-xylol ist, und das N-Alkyllactam N-Methylpyrrolidon ist.

6. Verfahren nach einem der Ansprüche 1 bis 5, dadurch gekennzeichnet daß das alkylsubstituierte p-Dihalobenzol in einer Menge von 15 bis 20 Mol% anwesend ist.

7. Verfahren nach einem der Ansprüche 1 bis 6, dadurch gekennzeichnet, daß die Polymerisation bei einer Temperatur von 180 bis 285°C durchgeführt wird, wobei die Polymerisation insbesondere über eine Zeit von 1—60h durchgeführt wird.

8. Verfahren nach einem der Ansprüche 2 bis 7, dadurch gekennzeichnet, daß das Molverhältnis von Alkalimetallcarboxylat, wenn verwendet, zu dem Alkalimetallsulfid innerhalb des Bereiches von 0,05:1 bis 1,5:1 liegt, wobei das Alkalimetallcarboxylat insbesondere ein Natriumcarboxylat ist.

9. Verfahren zum Herstellen eines Arylensulfid-Terpolymers bei dem man zuerst zumindest ein Alkalimetallsulfid in hydratisierter Form oder in einem wässrigen Gemisch mit zumindest einem N-Alkyllactam zur Bildung eines Reaktionsproduktes umsetzt, danach das Reaktionsprodukt zur Bildung einer dehydratisierten Zusammensetzung erwärmt, dann die dehydratisierte Zussamensetzung mit einem Gemisch, bestehend im wesentlichen aus zumindest einem unsubstituierten p-Dihalobenzol, zumindest einer aromatischen Polyhaloverbindung mit mehr als zwei Halogenatomen pro Molekül, zumindest einem alkylsubstituierten p-Dihalobenzol, und zumindest einem Vertreter ausgewählt aus (a) Wasser in einer Menge von 0,2 Mol bis 2,5 Mol pro Mol Alkalimetallsulfid und (b) zumindest einem Alkalimetallcarboxylat und Wasser, einschließlich Hydratwasser, in einer Menge von 0,0 Mol bis etwa 2,5 Mol pro Mol Alkalimetallsulfid unter Polymerisationsbedingungen über eine Zeit umsetzt, die ausreichend ist, um das gewünschte Terpolymer zu bilden, wobei das alkylsubstituierte p-Dihalobenzol in einer Menge von 12 bis 30 Mol% anwesend ist.

10. Terpolymer, hergestellt gemäß dem Verfahren nach einem der Ansprüche 1 bis 9.

11. Herstellungsgegenstand, hergestellt aus dem Terpolymer nach Anspruch 10.

**Revendications**

1. Procédé de préparation d'un terpolymère de sulfure d'arylène consistant à faire réagir au moins un sulfure de métal alcalin, au moins un p-dihalobenzène non substitué, au moins un composé polyhaloaromatique ayant plus de deux substituants halogène par molécule, au moins un p-dihalobenzène alkyl-substitué et au moins un N-alkyl lactame dans des conditions de polymérisation, de température et de temps suffisantes pour produire le terpolymère désiré dans lequel ce p-dihalobenzène alkyl-substitué est présent dans une quantité de 12 à 30 moles %.

2. Procédé selon la revendication 1, caractérisé en ce que cette réaction est effectuée en présence (a) d'eau, y compris l'eau d'hydratation, dans une quantité de 0,2 à 2,5 moles par mole de sulfure de métal alcalin ou (b) d'au moins un carboxylate de métal alcalin et l'eau, y compris et d'eau d'hydratation dans une quantité de 0,0 à 2,5 moles par mole de sulfure de métal alcalin.

3. Procédé selon la revendication 2, caractérisé en ce qu'on fait d'abord réagir ce sulfure de métal alcalin sous forme hydratée ou en mélange aqueux avec ce N-alkyl lactame pour former un produit de réaction, puis en ce qu'on chauffe le produit de la réaction pour former une composiiton déshydratée, puis en ce qu'on fait réagir la composition déshydratée avec un mélange contenant ce p-dihalobenzène non substitué, ce composé polyhaloaromatique ayant plus de deux atomes d'halogène par molécule, ce p-dihalobenzène alkyl-substitué et ce (a) ou (b).

4. Procédé selon l'une quelconque des revendications 1 à 3, caractérisé en ce que le rapport molaire de la combinaison de ce p-dihalobenzène non substitué et de ce p-dihalobenzène alkyl-substitué au sulfure de métal alcalin est dans l'intervalle de 0,98:1 à 1,03:1, le rapport molaire de ce composé polyhaloaromatique à ce sulfure de métal alcalin est dans l'intervalle de 0,0002:1 à 0,014:1, et le rapport molaire de ce N-alkyl lactame à ce sulfure de métal alcalin est dans l'intervalle de 2:1 à 10:1.

5. Procédé selon l'une quelconque des revendications 1 à 4, caractérisé en ce que ce p-dihalobenzène non substitué est du p-dichlorobenzène, ce composé polyhaloaromatique est le 1,2,4-trichlorobenzène, ce p-dihalobenzène alkyl-substitué est soit le 2,5-dichlorotoluène, soit le 2,5-dichloro-p-xylène et ce N-alkyl lactame est la N-méthylpyrrolidone.

6. Procédé selon au moins une des revendications 1 à 5, caractérisé en ce que ce p-dihalobenzène alkyl-substitué est présent dans une quantité de 15 à 20 moles %.

7. Procédé selon l'une quelconque des revendications 1 à 6, caractérisé en ce que cette polymérisation est effectuée à une température de 180 à 285°C; en particulier en ce que cette polymérisation est effectué pendant un temps de 1 à 60 heures.

8. Procédé selon l'une quelconque des revendications 2 à 7, caractérisé en ce que le rapport molaire du carboxylate de métal alcalin, lorsqu'il est utilisé, a ce sulfure de métal alcalin est dans l'intervalle de 0,05:1 à 1,5:1; en particulier, en ce que ce carboxylate de métal alcalin est un carboxylate de sodium.

9. Procédé de préparation d'un terpolymère de sulfure d'arylène, consistant à faire réagir d'abord au moins un sulfure de métal alcalin sous forme hydratée ou en mélange aqueux avec au moins un N-alkyl lactame pour former un produit de réaction, puis à chauffer le produit de réaction pour former une composition déshydratée, puis à faire réagir la composition déshydratée avec un mélange essentiellement constitué d'au moins un p-dihalobenzène non substitué, au moins un composé polyhaloaromatique ayant plus de 2 atomes d'halogène par molécule, au moins un p-dihalobenzène alkyl-substitué et au moins un membre choisi parmi (a) l'eau dans une quantité de 0,2 mole à 2,5 moles par mole de sulfure de métal alcalin, et (b) au moins un carboyxlate de métal alcalin et de l'eau, y compris de l'eau d'hydratation, dans une quantité de 0,0 mole à environ 2,5 moles par mole de sulfure de métal alcalin, dans des conditions de polymérisation, pendant un temps suffisant pour produire le terpolymère désiré, ce p-dihalobenzène alkyl-substitué étant présent dans une quantité de 12 à 30 moles %.

10. Terpolymère préparé selon la procédé de l'une des revendications 1 à 9.

11. Article manufacturé préparé à partir du terpolymère de la revendication 10.